# EUROPÄISCHE PATENTSCHRIFT

(11) **EP 4 045 456 B1**
(45) Veröffentlichungstag und Bekanntmachung des Hinweises auf die Patenterteilung: **08.11.2023**
(21) Anmeldenummer: 20793283.1
(22) Anmeldetag: 09.10.2020
(51) Int. Cl.: B67D 1/08, F25D 31/00, A47J 31/44

(54) **KÜHLVORRICHTUNG FÜR VORRATSBEHÄLTER MIT FLÜSSIGEN LEBENSMITTELN**
COOLING DEVICE FOR STORAGE CONTAINERS HAVING LIQUID FOODSTUFFS
DISPOSITIF DE REFROIDISSEMENT POUR RÉCIPIENTS DE STOCKAGE CONTENANT DES PRODUITS ALIMENTAIRES LIQUIDES

(30) Priorität: 17.10.2019 DE 102019128126
(43) Veröffentlichungstag der Anmeldung: 24.08.2022
(60) Teilanmeldung: 23199262.9
(73) Patentinhaber: FRANKE Kaffeemaschinen AG, 4663 Aarburg (CH)
(72) Erfinder: WENIGER, Stefan Remo, 5037 Muhen (CH)
(74) Vertreter: LBP Lemcke, Brommer & Partner Patentanwälte mbB
(86) Internationale Anmeldenummer: PCT/EP2020/078468
(87) Internationale Veröffentlichungsnummer: WO 2021/074038

(56) Entgegenhaltungen:
- EP-A1- 2 987 435
- WO-A1-2017/137204
- US-A- 4 566 287
- US-A- 5 190 188
- US-A1- 2010 005 903
- US-B1- 6 237 810

## Beschreibung

Die vorliegende Erfindung betrifft eine Vorrichtung zur Lagerung von mehreren Vorratsbehältern mit flüssigen Lebensmitteln, die an einer an die Vorrichtung angeschlossenen Getränkeausgabevorrichtung zur Ausgabe bereitgestellt werden sollen.

Eine solche Vorrichtung ist in der US 2010/0005903 A1 gezeigt, die einen Getränkeautomat beschreibt, bei dem unterschiedliche Geschmackszusätze aus Vorratsbehältern über jeweils eine zugeordnete Pumpe gefördert werden können.

Eine Kühlvorrichtung für Vorratsbehälter eines Getränkeautomaten ist in der US4566287 gezeigt.

Bei Getränkeausgabeautomaten zur Ausgabe von heißen und kalten Getränken erfolgt häufig eine Ausgabe bzw. Beimischung von flüssigen Lebensmitteln, die gekühlt gelagert werden müssen. Dies trifft insbesondere bei Kaffeevollautomaten zu, die neben frisch gebrühten Kaffeegetränken auch Milch oder milchhaltige Getränke ausgeben. So wird beispielsweise bei einem Cappuccino oder Latte Macchiato dem frisch gebrühten Kaffee aufgeschäumte Milch zugegeben. Die Lagerung der Milch muss hierbei in einem Kühlraum erfolgen, damit die Milch nicht verdirbt.

Bei Kaffeevollautomaten für die Verwendung im Gastronomiebereich ist bekannt, die Milch in einer separaten, als Beistellgerät ausgebildeten Kühleinheit aufzubewahren. Ein solches Beistellgerät für zwei oder mehr Vorratsbehälter ist beispielsweise in der WO 2017 137204 A1 gezeigt. An das Gerät können zwei Kaffeevollautomaten angeschlossen werden. Hierzu sind in dem Beistellgerät zwei Milchpumpen verbaut, mit denen Milch aus je einem der Vorratsbehälter zu dem jeweils angeschlossenen Kaffeevollautomaten gefördert werden kann.

Die vorliegende Erfindung hat sich zur Aufgabe gesetzt, eine Kühlvorrichtung zu schaffen, die flexibel einsetzbar ist und die Getränkevielfalt, die über ein solches Gerät bereitgestellt werden kann, zu erweitern.

Die Aufgabe wird gelöst durch die Merkmale des Anspruchs 1. Vorteilhafte Ausgestaltungen sind den abhängigen Ansprüchen zu entnehmen. Darüber hinaus wird eine Anordnung mit einer derartigen Kühlvorrichtung und einer an diese angeschlossenen Reinigungsvorrichtung angegeben.

Die erfindungsgemäße Kühlvorrichtung besitzt einen kühlbaren Vorratsraum zur Lagerung von mehreren Vorratsbehältern mit flüssigen Lebensmitteln sowie zwei oder mehr Aufnahmebuchten zur Aufnahme jeweils eines Pumpenmoduls zur Förderung flüssigen Lebensmittels einer dem betreffenden Pumpenmodul jeweils zugeordneten Lebensmittelart zu einer an die Kühlvorrichtung angeschlossenen Getränkeausgabevorrichtung. Wesentlich ist somit eine modulare Ausführung der Pumpenmodule, die in entsprechend hierfür ausgestaltete Aufnahmebuchten eingesetzt werden können. Außerdem ist wesentlich, dass die Pumpenmodule, die in der Kühlvorrichtung verbaut und betrieben werden können, jeweils nur einer Lebensmittelart zugeordnet sind. Somit können Pumpenmodule für unterschiedliche Lebensmittelarten in der Kühlvorrichtung flexibel kombiniert und betrieben werden. Es wird verhindert, dass ein Pumpenmodul mit unterschiedlichen Lebensmittelarten in Kontakt kommt, da dies zu einer geschmacklichen Beeinträchtigung führen könnte. Als Lebensmittelarten können unter anderem Milch und kalt extrahierter, gekühlter Kaffee gelagert und bereitgestellt werden.

Die Aufnahmebuchten der Kühlvorrichtung sind erfindungsgemäß derart ausgeführt, dass sie an einer Vorderseite eine Öffnung zum Einführen eines Pumpenmoduls und in einer der Öffnung abgewandten Seite ein oder mehrere hydraulische und/oder elektrische Steckanschlüsse aufweisen, über die jeweils mit an einer Rückseite des eingeführten Pumpenmoduls angeordneten und entsprechend positionierten Gegenstücken eine hydraulische und/oder elektrische Verbindung des eingeführten Pumpenmoduls mit der Kühlvorrichtung gebildet wird. Die Pumpenmodule können somit einfach von vorne in die Aufnahmebucht eingesetzt werden und es erfolgt ein selbsttätiger Anschluss des Pumpenmoduls, indem entsprechende elektrische bzw. hydraulische Steckanschlüsse an Pumpenmodul und Aufnahmebucht verbunden werden. Die hydraulischen Steckanschlüsse weisen vorzugsweise einen Schnellverschluss auf, sodass bei entnommenen Pumpenmodul die jeweiligen Anschlüsse verschlossen sind.

Bei einer bevorzugten Ausgestaltung der Kühlvorrichtung ist innerhalb des kühlbaren Vorratsraums ein Gestellrahmen mit Einschubfächern für die Pumpenmodule angeordnet und die Pumpenmodule sind als Einschubmodule ausgebildet. Dies ermöglicht eine besonders einfache Installation und eine schnelle und unproblematische Aufrüstung der Kühlvorrichtung mit weiteren oder alternativen Pumpenmodulen. Die Unterbringung der Pumpenmodule im gekühlten Bereich verhindert, dass in Pumpe und Leitungen zwischen einzelnen Produktbezügen gegebenenfalls verbliebene Lebensmittelreste verderben und verlängert die Zyklen, in denen eine automatische Reinigung der Pumpenmodule durchzuführen ist.

Insbesondere ist im Rahmen der vorliegenden Erfindung vorgesehen, dass jedes der Pumpenmodule frontseitig mindestens einen als Produktanschluss ausgebildeten ersten Anschluss für eine mit einem zugeordneten Vorratsbehälter verbindbare, flexible Anschlussleitung aufweist. Der Produktanschluss für das zu fördernde Lebensmittel befindet sich somit auf der für den Benutzer zugänglichen Vorderseite des Pumpenmoduls, sodass das Pumpenmodul sehr einfach mit einem in dem Vorratsraum gelagerten Vorratsbehälter verbunden werden kann.

Bei einer Weiterbildung der Erfindung besitzt jedes der Pumpenmodule frontseitig außerdem mindestens je einen als Reinigungsanschluss ausgebildeten zweiten Anschluss, mit dem die dem jeweiligen Pumpenmodul zugehörige flexible Ansaugleitung statt mit einem Vorratsbehälter verbunden werden kann, um eine Schleife zu bilden. Dieser Reinigungsanschluss ist hierbei zur Rückseite des Pumpenmoduls geführt und dort mit einer Reinigungsflüssigkeitszuleitung verbunden. Auf diese Weise kann, indem die Ansaugleitung vom Vorratsbehälter abgenommen und mit dem zweiten Anschluss verbunden wird, ein Reinigungsvorgang des betreffenden Pumpenmoduls durchgeführt werden, wobei gleichzeitig die Ansaugleitung mit gereinigt wird.

Des Weiteren kann zumindest eines der Pumpenmodule frontseitig mit zwei Produktanschlüsse für mit separaten Vorratsbehältern verbindbare Ansaugleitungen und zwei Reinigungsanschlüsse ausgestattet sein, wobei die Reinigungsanschlüsse innerhalb des Pumpenmoduls parallelgeschaltet sind und die beiden Produktanschlüsse über eine Ventilanordnung wahlweise mit einer Pumpe des Pumpenmoduls verbindbar sind. Dies ermöglicht eine gesteuerte Umschaltung von einem Vorratsbehälter auf den anderen sogar während der Laufzeit einer Produktzubereitung. Somit braucht die Produktzubereitung nicht unterbrochen zu werden, wenn einer der Vorratsbehälter leer ist. Stattdessen kann an das Bedienpersonal eine Leermeldung ausgegeben werden, den leeren Behälter auszutauschen. Besonders im Selbstbedienbereich kann dies vorteilhaft sein, da nach einer Leermeldung für den ersten angeschlossenen Vorratsbehälter der Produktbezug über den zweiten angeschlossenen Vorratsbehälter gewährleistet bleibt und ausreichend Zeit zum Austausch bzw. Auffüllen zur Verfügung steht, ohne dass die Getränkeausgabevorrichtung außer Betrieb genommen oder ein betreffender Produktbezug am Gerät gesperrt werden müsste.

Bevorzugt ist die Reinigungsflüssigkeitszuleitung hierbei über ein an der Rückseite des jeweiligen Pumpenmoduls befindlichen hydraulischen Steckanschluss zu einer an die Kühlvorrichtung angeschlossenen Reinigungsvorrichtung geführt, welche das jeweilige Pumpenmodul zur Durchführung eines Reinigungsvorgangs mit Reinigungsflüssigkeit versorgt. Ein hydraulischer Steckanschluss an der Rückseite des Pumpenmoduls ermöglicht eine einfache Entnahme bzw. Installation des Pumpenmoduls. Über eine extern an die Kühlvorrichtung angeschlossene Reinigungsvorrichtung kann eine betriebssichere und hygienische Reinigung aller Pumpenmodule sichergestellt werden, wobei der Lebensmittelbereich der Kühlvorrichtung von der Reinigungsvorrichtung räumlich getrennt bleibt, sodass eine versehentliche Kontamination von Lebensmitteln mit Reinigungsflüssigkeit ausgeschlossen ist.

Im Rahmen der vorliegenden Erfindung kann außerdem vorgesehen sein, dass jedes der Pumpenmodule rückseitig mindestens einen hydraulischen Steckanschluss mit Schnellverschluss aufweist, der jeweils mit einem an der Rückseite der Aufnahmebuchten angeordneten und entsprechend positionierten Gegenpart eine hydraulische Verbindung zu je einer innerhalb der Kühlvorrichtung verlegten Getränkeleitung für das jeweils zu fördernde flüssige Lebensmittel bildet.

Ein solcher Steckanschluss mit Schnellverschluss ermöglicht eine einfache Entnahme und Installation der Pumpenmodule. Über die innerhalb der Kühlvorrichtung verlegten Getränkeleitungen werden beim Einbau der Kühlvorrichtung die Pumpenmodule mit der bzw. den angeschlossenen Getränkeausgabevorrichtungen verbunden.

Bei einer besonders bevorzugten Ausführungsform weist jedes der Module einen über die Kühlvorrichtung auslesbaren Code auf, welcher die dem Pumpenmodul zugeordnete Lebensmittelart angibt. Ein solcher Code kann z.B. in Form eines RFID-Chips oder eines optisch lesbaren Strich- oder Blockcodes angebracht sein. Die Kühlvorrichtung ist hierbei ausgebildet, die von dem jeweiligen Pumpenmodul ausgelesene Lebensmittelart an die angeschlossene Getränkeausgabevorrichtung zu melden. Hierdurch wird erreicht, dass die Steuerung der Getränkeausgabevorrichtung die Information erhält, welche Pumpenmodule in der angeschlossenen Kühlvorrichtung verbaut sind und welche Arten von Lebensmittel somit zur Getränkeausgabe bzw. Beimischung zur Verfügung stehen. Darüber hinaus ist es vorteilhaft, wenn die Kühlvorrichtung zusätzlich den jeweils aktuellen Betriebszustand der Pumpenmodule an die angeschlossene Getränkeausgabevorrichtung meldet, beispielsweise, ob ein Lebensmittel leer ist und der betreffende Vorratsbehälter ausgetauscht werden muss oder ob an einem der Pumpenmodule eine Störung vorliegt.

Eine Getränkeart kann beispielsweise Milch sein. Nachdem die Steuerung einer angeschlossenen Getränkeausgabevorrichtung die Information erhält, dass ein Pumpenmodul für Milch angeschlossen ist, können über die Getränkeausgabevorrichtung Milch oder milchhaltige Getränke sowie Getränke mit Milchschaum angeboten und ausgegeben werden. Eine weitere Lebensmittelart könnte kalt extrahierter Kaffee sein. Erhält die Steuerung einer angeschlossenen Getränkeausgabevorrichtung die Information, dass ein Pumpenmodul für kalt extrahierten Kaffee vorhanden ist, so kann dieser als zusätzliche Getränkevariante an der Getränkeausgabevorrichtung angeboten und ausgegeben werden. Eine Erkennung der verfügbaren Getränkearten anhand eines Codes der Pumpenmodule ermöglicht somit einen einfachen Plug-and-Play-Betrieb.

Die Pumpenmodule umfassen jeweils eine Pumpe für das ihnen zugeordnete Medium. Bei einer bevorzugten Ausführungsform weist zumindest eines der Pumpenmodule neben einer Pumpe eine saugseitig der Pumpe in die Pumpenzuleitung einmündende Gaszuführleitung sowie ein in Förderrichtung hinter der Pumpe angeordnetes Gegendruckelement auf, über welches von der Pumpe angesaugtes Fluid in Richtung der an die Kühlvorrichtung angeschlossenen Getränkeausgabevorrichtung gefördert wird. Über die Gaszuführleitung wird von der Pumpe zusätzlich Gas mit angesaugt, sodass ein Lebensmittel-GasGemisch entsteht. Das Gegendruckelement führt zu einer Druckerhöhung in der Pumpe. Hierdurch wird in der Pumpe aus dem Lebensmittel/Gas-Gemisch ein Schaum erzeugt. Dies kann beispielsweise zur Ausgabe von Milchschaum genutzt werden. Ebenso ist es möglich, andere Getränkearten wie etwa kalt extrahierten Kaffee mit einem Gas aufzuschäumen. Als Gas kann beispielsweise (Umgebungs-)Luft oder Stickstoff verwendet werden.

Als Gegendruckelement kann entweder eine Engstelle, also eine Querschnittsverengung und anschließende Erweiterung, wie etwa eine Blende oder Drossel, zum Einsatz kommen. Das Gegendruckelement kann auch durch einen einfachen Druckschlauch mit verringertem Innenquerschnitt gebildet werden. Bevorzugt im Rahmen der Erfindung ist jedoch die Verwendung eines Mischers, insbesondere eines statischen Wendelmischers, der keine Querschnittsverengung aufweist, sondern durch mehrfache Richtungsänderung als Fließwiderstand wirkt. Außerdem bewirkt ein solcher Mischer eine mehrfache Aufteilung und Zusammenführung des mit Gas angereicherten Flüssigkeitsstroms in mehrere Teilströme, sodass eine weitere Durchmischung und Verfeinerung des cremeartigen Lebensmittel/Gas-Gemischs erzielt wird. Eine weitere Form eines im Rahmen der Erfindung geeigneten Fließwiderstands ist ein sogenanntes Widerstandsdurchlasselement, welches aus einer Vielzahl labyrinthartig verzweigter Strömungswege gebildet wird und ebenfalls eine mehrfache Aufteilung des Fluidstroms in Teilströme, Zusammenführung und erneute Aufteilung bewirkt.

Als Pumpe kommt insbesondere eine Zahnradpumpe in Betracht. Es hat sich herausgestellt, dass mit diesem Pumpentyp die beste feincremige bzw. schaumartige Konsistenz gelingt. Dies mag an einer besonders gründlichen Durchmischung des Lebensmittel/Gas-Gemisches durch die Zahnräder der Pumpe liegen.

Bei einer weiteren bevorzugten Ausführungsform kann die zugeführte Gasmenge mithilfe eines Gasdosierventils dosiert werden. Als Gasdosierventil kann beispielsweise ein einfaches Nadelventil dienen, mit dem die Luftmenge durch Einstellen der Ansaugöffnung dosiert werden kann. Bevorzugt im Rahmen der vorliegenden Erfindung wird jedoch ein getaktetes Schließventil, gegebenenfalls in Kombination mit einer festen Blende, verwendet, welches in rascher Folge öffnet und schließt und somit die Ansaugöffnung freigibt und wieder verschließt. Zur Dosierung kann in diesem Fall das Tastverhältnis, also das Verhältnis zwischen der Öffnungszeit und der Wiederholperiode, verändert werden. Somit ist das Gasdosierventil im Mittel kürzer oder länger geöffnet, um weniger bzw. mehr Gas beizumischen. Über die Gasmenge kann insbesondere auch die Konsistenz des ausgegebenen Getränks verändert werden.

Soll einem oder mehreren Lebensmittelarten statt normaler Umgebungsluft ein Gas aus einem Gasdruckspeicher, etwa Stickstoff, beigemischt werden, so kann an der Kühlvorrichtung ein Hochdruckanschluss zum Anschluss eines außerhalb der Kühlvorrichtung angeordneten Gasdruckbehälters vorgesehen sein, in welchem das Gas unter Druck gespeichert ist. In diesem Falle befindet sich an dem Hochdruckanschluss ein Druckminderer, welcher ausgebildet ist, das Gas bis zu einem Druck nahe des Umgebungsdrucks, insbesondere weniger als 0,5 bar, weiter bevorzugt weniger als 100 mbar, höchst bevorzugt weniger als 50 mbar über dem Umgebungsdruck zu entspannen. Über diesen Druckminderer ist der Hochdruckanschluss mit der in die Ansaugleitung mündenden Gaszuführleitung verbunden, um das entspannte Gas dem angesaugten Getränk saugseitig der Pumpe zuzuführen.

Bei einer weiteren vorteilhaften Weiterbildung der vorliegenden Erfindung ist an der Kühlvorrichtung eine Schnittstellenschaltung vorgesehen, die zum Anschluss einer der externen Getränkeausgabevorrichtung zugeordneten Steuerung ausgebildet ist. Über die Schnittstellenschaltung sind die Pumpenmodule ansteuerbar, sodass die Ausgabe flüssiger Lebensmittel von der Steuerung der Getränkeausgabevorrichtung steuerbar ist.

Darüber hinaus betrifft die vorliegende Erfindung eine Anordnung aus einer Kühlvorrichtung der vorstehend beschriebenen Art und einer an die Kühlvorrichtung angeschlossenen Reinigungsvorrichtung, welche die einzelnen Pumpenmodule der Kühlvorrichtung über separate, an einem Anschlussfeld der Kühlvorrichtung angeschlossene Reinigungsflüssigkeitszuleitungen mit Reinigungsflüssigkeit versorgt, wenn jeweils ein Reinigungsvorgang durchgeführt werden soll. Durch die externe Anordnung einer Reinigungsvorrichtung bleibt die Lebensmittellagerung räumlich getrennt von der Aufbewahrung und Verarbeitung der Reinigungschemikalien. Die einzelnen Pumpenmodule können einzeln, unabhängig voneinander oder alle zugleich gereinigt werden.

Die Funktion der Reinigungsvorrichtung liegt im Bereitstellen der erforderlichen Reinigungsflüssigkeit, wenn ein Reinigungsvorgang durchgeführt werden soll. In einer bevorzugten Ausführungsform besitzt die Reinigungsvorrichtung einen Reinigungsmittelvorratsbehälter mit Reinigerkonzentrat und einen Mischbehälter zum Anmischen der Reinigungsflüssigkeit aus Reinigerkonzentrat und Wasser. Der Mischbehälter kann hierzu über ein Absperrventil mit einem Wasserzulauf verbunden werden. Die Dosierpumpe fördert Reinigerkonzentrat aus dem Reinigungsmittelvorratsbehälter in den Mischbehälter. Über mehrere mit dem Mischbehälter verbundene Auslassventile können verschiedene Auslassanschlüsse, die mit den Reinigungsflüssigkeitszuleitungen der Kühlvorrichtung verbunden sind, separat aktiviert werden.

Vorzugsweise besitzt die Reinigungsvorrichtung mindestens einen Durchflussmesser zur Bestimmung der Menge an in den Mischbehälter geförderten Reinigerkonzentrats und/oder Wassers. Weiter ist es vorteilhaft, wenn Wasserzulauf und Dosierpumpe über Schaltmittel schaltbar mit einer Zuleitung zum Mischbehälter verbindbar sind, in der sich der Durchflussmesser befindet. Dieser kann somit sowohl zur Dosierung der Reinigerkonzentrats als auch der Wassermenge dienen. Des Weiteren kann ein zweiter Durchflussmesser in der Auslassleitung des Mischbehälters vorgesehen sein, mit dem die Menge pro Reinigungszyklus abgegebener Reinigungsmittellösung bestimmt werden kann.

Weitere Vorteile und Eigenschaften der Erfindung ergeben sich aus der nachfolgenden Beschreibung eines Ausführungsbeispiels anhand der Figuren. Es zeigen
- Figur 1: eine Ansicht einer Kühlvorrichtung mit Lebensmittelbehältern und Pumpenmodulen,
- Figur 2: einen in der Kühlvorrichtung von Figur 1 verbauten Gestellrahmen mit insgesamt vier Einschubfächern für Pumpenmodule,
- Figur 3: ein in der Kühlvorrichtung von Figur 1 verwendetes Pumpenmodul,
- Figur 4: ein Wasserlaufschema einer Kühlvorrichtung mit vier Pumpenmodulen und
- Figur 5a: einen vergrößerten Ausschnitt eines Pumpenmoduls aus Figur 4 mit einem Medienanschluss,
- Figur 5b: ein alternatives Pumpenmodul mit zwei Medienanschlüssen,
- Figur 6: einen vergrößerten Ausschnitt der Reinigungsvorrichtung aus Figur 4.

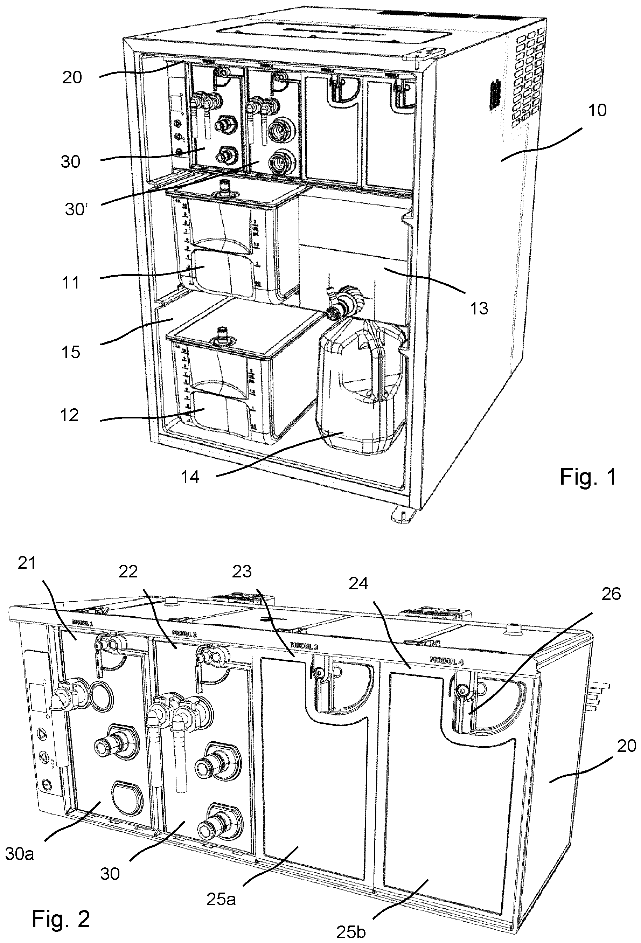

In Figur 1 ist beispielhaft eine als Kühlschrank ausgebildete Kühlvorrichtung 10 mit einem gekühlten Vorratsraum 15 und vier darin gelagerten Vorratsbehältern 11, 12, 13, 14 für flüssige Lebensmittel gezeigt. Die Behälter 11, 12 sind mit Deckel verschlossene, transparente Kunststoffbehälter, die mit Flüssigkeiten befüllt werden können. Bei dem Behälter 13 handelt es sich um einen Einwegbehälter in der Art einer Bag-in-Box-Verpackung, also eines in einem Karton gehaltenen Schlauchbehälters. Als Behälter 14 ist beispielhaft eine Art Kunststoffkanister ("Gallone") gezeigt. Selbstverständlich können verschiedene Behältertypen beliebig kombiniert werden, z.B. alle Behälter können als Bag-in-Box oder als befüllbare Kunststoffbehälter ausgeführt sein.

Im oberen Bereich des Kühlschranks 10 ist ein Gestellrahmen 20 eingebaut ist. In Figur 1 sind in den Gestellrahmen zwei Pumpenmodule 30, 30' in Aufnahmebuchten eingesetzt, zwei weitere Aufnahmebuchten sind unbelegt und mit Leerblenden verschlossen. Grundsätzlich können die Pumpenmodule 30, 30' gleichartig aufgebaut sein. Es ist jedoch nicht ausgeschlossen, dass die Pumpenmodule sich je nach Art des jeweils vorgesehenen Lebensmittels in ihrem Aufbau unterscheiden. Beispielsweise erkennt man in Figur 1, dass die Pumpenmodule 30, 30' unterschiedliche frontseitige Anschlüsse aufweisen.

In Figur 2 ist der Gestellrahmen näher dargestellt, wobei wiederum unterschiedliche Pumpenmodule 30, 30a eingesetzt sind. Der Gestellrahmen 20 besitzt insgesamt vier Einschubfächer 21, 22, 23, 24, die als Aufnahmebuchten zur Aufnahme der Pumpenmodule dienen. In die Einschubfächer 21 und 22 ist jeweils ein Pumpenmodul 30, 30a eingesetzt. Die Einschubfächer 23 und 24 sind leer gelassen und mit einer Blende 25a, 25b verschlossen, können jedoch bei Bedarf jederzeit auch mit einem Pumpenmodul belegt werden. Die als Einschubmodule ausgebildeten Pumpenmodule 30, 30a sowie die Blenden 25a, 25b sind jeweils mit einem Riegel 26 versehen, mit dem die Pumpenmodule 30, 30a bzw. Blenden 25a, 25b im Gestellrahmen 20 verriegelt sind. Eine eigentlich vorhandene Fronttür des Kühlschranks 10 ist in Figur 1 zur besseren Übersichtlichkeit weggelassen.

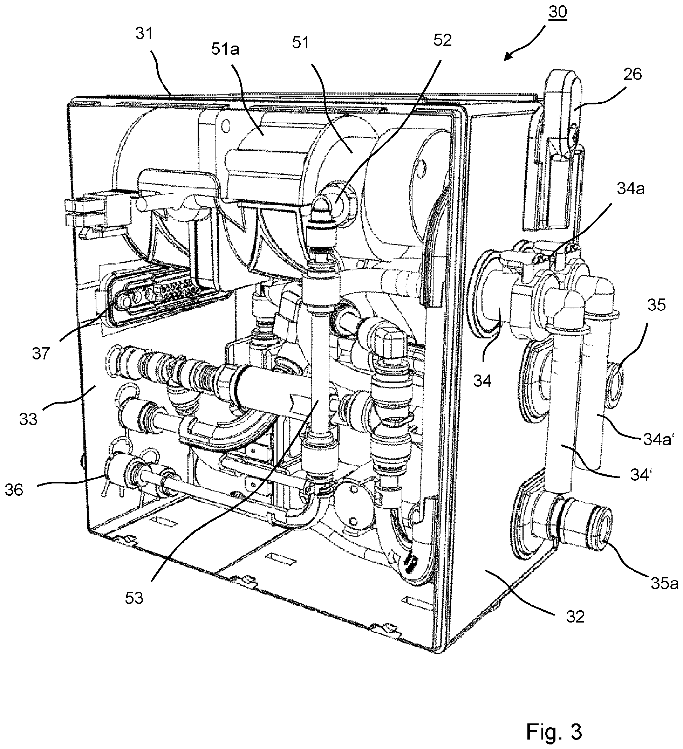

Das Pumpenmodul 30 ist in Figur 3 näher dargestellt. Das als Einschubmodul ausgebildete Pumpenmodul 30 besitzt ein Gehäuse 31 mit einer Gehäusefrontseite 32 und einer Rückwand 33. An der Frontseite 32 befindet sich nebeneinander angeordnet zwei Produktanschlüsse 34, 34a an welche jeweils über einen entsprechenden Schlauchverbinder ein Ansaugschlauch 34', 34a' angeschlossen ist. Diese sind hier aus Übersichtlichkeitsgründen abgeschnitten, führen jedoch tatsächlich zu jeweils einem der im Kühlschrank untergebrachten Vorratsbehälter 11-14. Außerdem befinden sich an der Frontseite 32 zwei übereinander angeordnete Reinigungsanschlüsse 35, auf welche jeweils das entfernte, hier nicht dargestellte Ende des Ansaugschlauchs 34', 34a' zur Durchführung einer Reinigung bei Bedarf aufgesteckt oder -geschraubt werden kann. Die genaue Funktion der Reinigungsanschlüsse 35, 35a wird später näher erläutert.

An der Rückwand 33 des Pumpenmoduls 30 ist ein elektrischer Steckanschluss 37 sowie ein hydraulischer Steckanschluss 36 angeordnet. Über den hydraulischen Steckanschluss 36 wird das von dem Pumpenmodul 30 geförderte flüssige Lebensmittel bereitgestellt. Über entsprechend positionierte Gegenstücke an der Rückseite des Gestellrahmens 20 erfolgt ein elektrischer und hydraulischer Anschluss des Pumpenmoduls 30 innerhalb des Kühlschranks 10.

In der Darstellung der Figur 3 ist eine Seitenwand des Gehäuses 31 des Pumpenmoduls 30 entfernt und gibt einen Blick in das Innere des Pumpenmoduls 30 frei. Zu erkennen ist im oberen Bereich eine Pumpe 51 mit Pumpenmotor 51a.

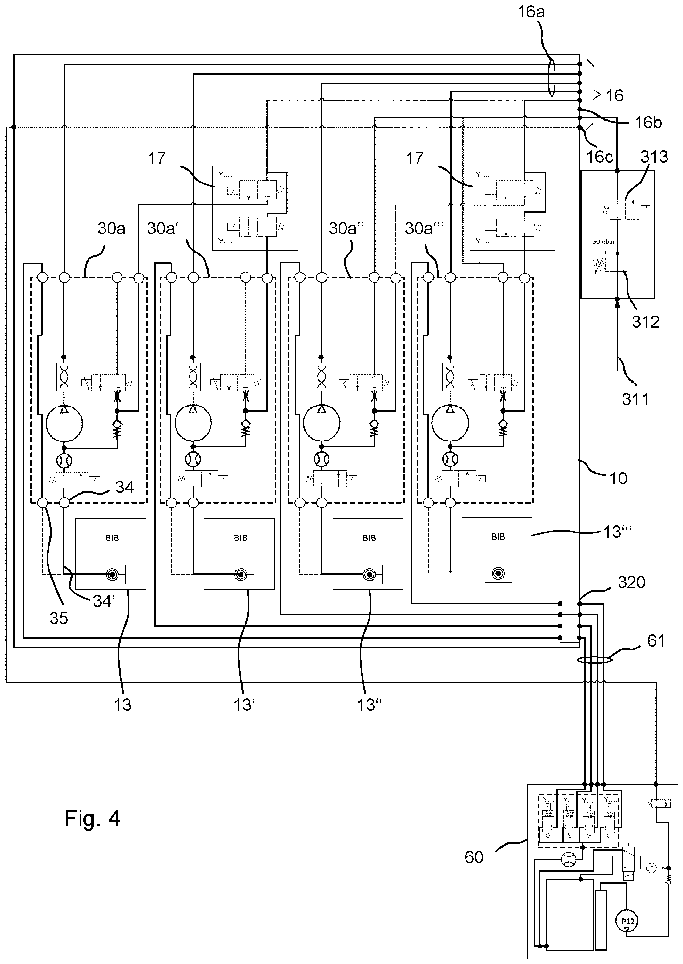

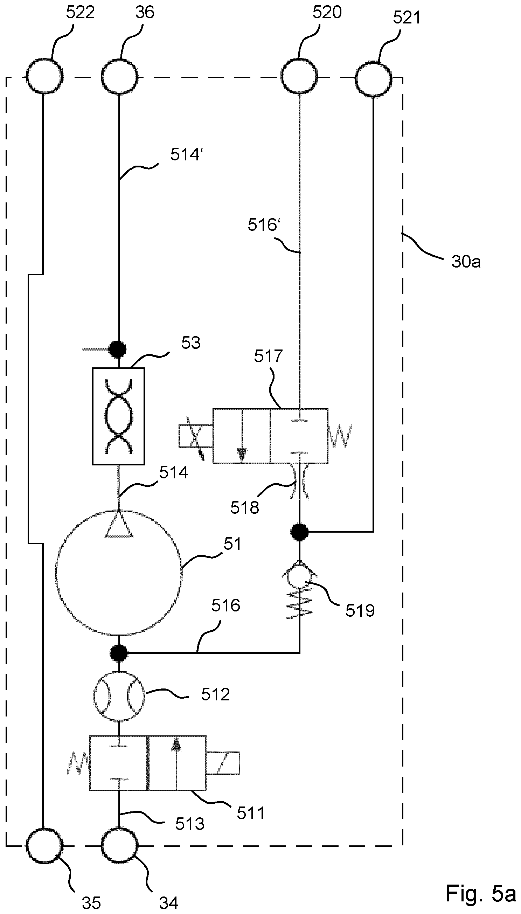

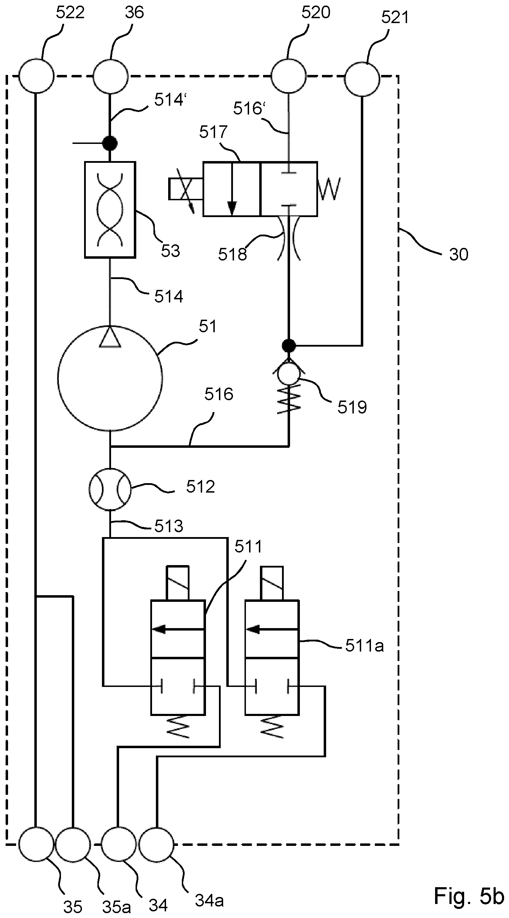

Die Ansaugseite der Pumpe 51 ist mit den frontseitigen Anschlüssen 34 verbunden. Am Auslassanschluss 52 der Pumpe 51 befindet sich ein als Druckerhöhungselement dienender statischer Mischer 53, ein sogenannter Wendelmischer. Die weiteren Bauteile des Pumpenmoduls sind in Figur 3 nur schematisch gezeigt. Der genaue Aufbau und die hydraulische Verschaltung der Komponenten innerhalb der Pumpenmodule wird nachfolgend anhand der Figuren 4, 5a und 5b näher erläutert.

Während das Pumpenmodul 30 wie erläutert zwei Produktanschlüsse 34, 34a mit jeweils zu einem Vorratsbehälter 13 führenden Ansaugschlauch 34', 34a' aufweist, sind bei dem zweiten in den Gestellrahmen in Figur 2 eingesetzten Pumpenmodul 30a jeweils nur ein Produktanschluss 34 und ein Reinigungsanschluss 35 zu erkennen.

Wie in Figur 2 gezeigt können wahlweise Pumpenmodule 30 mit zwei Produktanschlüssen oder Pumpenmodule 30a mit nur einem Produktanschluss verwendet werden, wobei die betreffenden Module auch gemischt werden können. Während bei Pumpenmodulen 30a vom Typ mit nur einem Produktanschuss also nur ein Vorratsbehälter angeschlossen werden kann, können an Pumpenmodule 30 vom Typ mit zwei Produktanschlüssen dementsprechend zwei Vorratsbehälter angeschlossen werden. Über Umschaltventile innerhalb des Pumpenmoduls 30 kann in diesem Fall, wenn einer der angeschlossenen Vorratsbehälter leer ist, auf den anderen umgeschaltet werden. Entsprechend erkennt man ebenfalls an der Frontseite des Pumpenmoduls 30 zwei Reinigungsanschlüsse 35, 35a, auf die die Ansaugschläuche 34', 34a' zur Durchführung einer Reinigung aufgesteckt werden können.

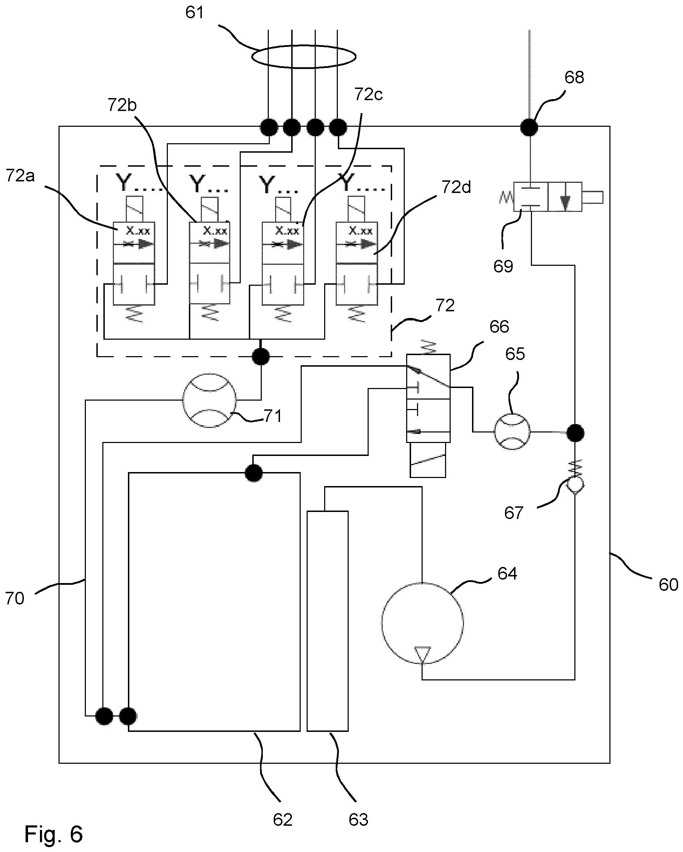

In Figur 4 ist der Aufbau und die hydraulische Verschaltung der Pumpenmodule innerhalb der Kühlvorrichtung 10 in Form eines sogenannten Wasserlaufschemas gezeigt. In der Kühlvorrichtung 10 sind in diesem Fall insgesamt vier gleichartig aufgebaute Pumpenmodule 30a, 30a', 30a", 30a‴ mit jeweils nur einem Produktanschluss 34 eingebaut. Jedes der Pumpenmodule ist saugseitig mit einem Vorratsbehälter 13, 13', 13", 13‴ verbunden, der jeweils als Einwegbehälter in Form einer Bag-in-Box-Verpackung ausgestaltet ist. Die betreffende Ansaugleitung 34' ist mit dem frontseitigen Anschluss 34 des jeweiligen Pumpenmoduls 30a, 30a', 30a", 30a‴ verbunden. Die Ansaugleitung 34' kann von dem jeweiligen Vorratsbehälter 13 im Bedarfsfall abgenommen und stattdessen mit dem zweiten frontseitigen Anschluss 35 verbunden werden, wenn nämlich ein Reinigungsvorgang durchgeführt werden soll. Dies ist durch eine gestrichelte Linie angedeutet. Zur Reinigung dient eine über entsprechende Zuführleitungen 61 mit der Kühlvorrichtung 10 verbundene Reinigungsvorrichtung 60, deren Aufbau und Funktion weiter unten anhand von Figur 6 näher erläutert wird.

Im oberen Bereich der Kühlvorrichtung sind verschiedene hydraulische Anschlüsse 16 angeordnet, über die bis zu zwei externe Kaffeevollautomaten an die Kühlvorrichtung 10 angeschlossen werden können. Die Anschlüsse 16 umfassen einerseits hydraulische Anschlüsse für die von den Pumpenmodulen 30a, 30a', 30a", 30a‴ kommenden Lebensmittelleitungen 16a, daneben einen Anschluss für Kaltwasser 16b, der in nachfolgend zu erläuternder Weise zum Spülen der Pumpenmodule 30a, 30a', 30a", 30a‴ mit Kaltwasser dient, sowie einem Heißwasseranschluss 16c, der zur Reinigungsvorrichtung 60 durchgeschleift ist und über den Heißwasser vom Heißwasserbereiter eines angeschlossenen Kaffeevollautomaten für Reinigungsvorgänge bereitgestellt wird.

Das in Figur 5a als Ausschnitt vergrößerte Pumpenmodul 30a umfasst eine elektrische Pumpe 51, die ansaugseitig über eine Ansaugleitung 511 mit dem Anschluss 34 verbunden ist. In der Ansaugleitung 511 befindet sich zwischen Anschluss 34 und Pumpe 51 ein Durchflussmesser 512, mit dem die angesaugte Fluidmenge bestimmt werden kann, sowie ein Schließventil 513, welches zu Beginn eines Produktbezugs geöffnet und nach Beendigung des Produktbezugs geschlossen wird, um ein Rückfließen von Fluid am Anschluss 34 zu verhindern.

Über eine Auslassleitung 514 ist an der Druckseite der Pumpe 51 der als Gegendruckelement dienende Wendelmischer 53 angeschlossen. Von diesem führt die Auslassleitung 514' zu dem rückseitigen Steckanschluss 36.

Außerdem mündet in die Ansaugleitung 511 zwischen dem Durchflussmesser 512 und der Pumpe 51 eine Gaszuführleitung 516. In der Gaszuführleitung 516 befindet sich ein Gasdosierventil 517, eine feste Blende 518 und ein Rückschlagventil 519. Das Gasdosierventil 517 ist im Ausführungsbeispiel als getaktetes Luftventil, also als in schneller Folge, intermittierend öffnend und schließend betriebenes Schaltventil ausgeführt. Die Frequenz mit der das Luftventil 517 betrieben wird, kann hierbei im Bereich zwischen etwa 10 und 30 Hz liegen. Das Rückschlagventil 519 dient lediglich dazu, ein Eindringen von Flüssigkeit in die Luftzuführleitung 516 zu verhindern.

Von dem Luftventil 517 führt die Luftzuführleitung 516' zu einem pneumatischen Steckanschluss an der Rückwand 33 des Pumpenmoduls 30. Über diesen kann ein Gas wie etwa Stickstoff zugeführt werden. Zu diesem Zweck ist an der Kühlvorrichtung wie in Figur 4 gezeigt ein Hochdruckanschluss 311 vorgesehen. An diesen kann ein mit Stickstoff gefüllter Gasdruckbehälter, etwa eine herkömmliche Gasflasche mit ca. 200 bar Gasdruck, angeschlossen werden. Hierzu befinden sich außerhalb des Kühlschranks an dem Hochdruckanschluss 311 ein Druckminderer 312 und ein Schließventil 313. Der Druckminderer 312 ist im Ausführungsbeispiel so ausgeführt bzw. so eingestellt, dass er das unter Druck stehende Gas am Eingang auf einen Ausgangsdruck von lediglich 50 mbar reduziert, mit dem das Gas ansaugseitig der Pumpe über die Luftzuführleitung 516 in die Ansaugleitung 511 eingeleitet wird.

Bei einem Druckminderer (auch als Druckreduzierventil bezeichnet) wird der Ausgangsdruck auf einen Steuereingang zurückgeführt und sorgt über einen Druckaufnehmer dafür, dass das Druckventil bei Überschreiten des vorgegebenen Sollausgangsdrucks sperrt, bei Unterschreiten wieder öffnet. Somit kann der Ausgangsdruck nicht über diesen voreingestellten Wert ansteigen. Als Druckaufnehmer kann hierbei ein Kolben oder eine Membran dienen.

An der Rückwand 33 des Pumpenmoduls 30 befinden sich außerdem noch zwei hydraulische Anschlüsse 521 und 522. Über den Anschluss 521, der über einen Ventilblock 17 mit dem Kaltwasseranschluss 16b der Kühlvorrichtung 10 verbunden ist, können die Luftzuführleitung 516 und das Rückschlagventil 519 gespült werden.

Der rückwärtige Anschluss 522 ist innerhalb des Pumpenmoduls 30 zu dem frontseitigen Anschluss 35 durchverbunden. Außerhalb des Pumpenmoduls 30 führt eine Leitung zu dem Mehrfachanschluss 320, über den die von der Reinigungsvorrichtung 60 kommenden Reinigungsmittelzuleitungen 61 angeschlossen sind.

Wie erläutert, wird zur Durchführung eines Reinigungsvorgangs der Ansaugschlauch 34' vom frontseitigen Anschluss 34 kommend an den zweiten Anschluss 35 angeschlossen und so eine Schleife gebildet (gestrichelte Linie in Fig. 4). Von der Reinigungsvorrichtung 60 wird eine Reinigungsmittellösung 30 bereitgestellt. Das einlassseitige Ventil 513 wird geöffnet und die Pumpe 51 angeschaltet. Somit wird die von der Reinigungsvorrichtung 60 kommende Reinigungsmittellösung über die zu einer Schleife verbundene Ansaugleitung 34' angesaugt und über die Auslassleitung 514 bzw. die daran angeschlossene Getränkeleitung 16a in Richtung des externen Kaffeevollautomaten gefördert. Dort wird die Reinigungsmittellösung entweder an einem unter dem dortigen Getränkeauslass platzierten Auffangbehälter aufgefangen oder es wird ein Drainageventil geöffnet und die Reinigungsmittellösung vor dem Getränkeauslass in Richtung eines Ablaufs abgeleitet. Wenn die Reinigung beendet ist, schaltet die Reinigungsvorrichtung auf Nachspülen um und stellt noch eine bestimmte Zeit lang frisches Wasser zum Nachspülen der Leitungen zur Verfügung.

Im Betrieb wird die Ansaugleitung jedes der Pumpenmodule 30a, 30a', 30a", 30a‴ wie in Figur 4 gezeigt mit einem zugeordneten Vorratsbehälter 13, 13', 13", 13‴ verbunden. Über die Steuerschnittstelle der Kühlvorrichtung 10 können die Pumpenmodule 30a, 30a', 30a", 30a‴ von einer angeschlossenen Getränkeausgabevorrichtung, beispielsweise einem Kaffeevollautomaten, angesteuert werden, sodass gekühltes Getränk ausgegeben wird. Hierzu wird das betreffende Einlassventil 513 geöffnet und die Pumpe 51 in Betrieb gesetzt. Wird gleichzeitig das Luftventil 517 betätigt und das Schließventil 313 am Gasanschluss 511 geöffnet, so wird von der Pumpe 51 Gas mit angesaugt. Über das Luftventil 517 kann die zugeführte Gasmenge dosiert werden. Die Pumpe 51 saugt somit ein Flüssigkeits/Gas-Gemisch an. Das Gegendruckelement 53 am Pumpenausgang bewirkt eine Druckerhöhung innerhalb der Pumpe 51. Dies führt zu einer Durchmischung des Flüssigkeits/Gas-Gemischs in der Pumpe 51 und erzeugt auf diese Weise ein feincremiges bzw. schaumartiges, mit Gas angereichertes Fluid, das über die Ausgabeleitung 16a in Richtung der angeschlossenen Getränkeausgabevorrichtung gefördert wird, wo es an einem entsprechenden Getränkeauslass ausgegeben oder einem Kaffeegetränk oder anderweitigen Getränk zugefügt werden kann.

In Figur 5b ist das Pumpenmodul 30 vom Typ mit zwei Produktanschlüssen 34, 34a dargestellt. Der Aufbau entspricht dem in Figur 5a gezeigten, mit dem Unterschied, dass jeder der beiden Produktanschlüsse 34, 34a mit einem Ventil 511, 511a versehen ist. Hinter den Ventilen 511, 511a sind die Leitungen über ein T-Stück mit der gemeinsamen Pumpenzuleitung 513 verbunden. Über die Steuerung wird sichergestellt, dass bei einem Produktbezug nur jeweils eines der Ventile 511, 511a geöffnet ist. Im Falle, dass einer der angeschlossenen Vorratsbehälter leer ist, kann auf den anderen Produkteingang umgeschaltet werden.

Außerdem sind wie bereits erläutert zwei Reinigungsanschlüsse 35, 35a vorgesehen. Diese sind innerhalb des Geräts über ein T-Stück parallelgeschaltet und mit dem rückseitigen Anschluss 522 durchverbunden. Im Falle eines Reinigungsvorgangs werden die beiden Ansaugschläuche 34', 34a' von ihrem jeweiligen Vorratsbehälter abgenommen und mit je einem der beiden Reinigungsanschlüsse 35, 35a verbunden. Die Reinigung läuft dann in der zuvor beschriebenen Weise ab, wobei die beiden Ventile 511, 511a zum Spülen der Ansaugschläuche 34', 34a' nacheinander geöffnet werden können.

Als flüssige Lebensmittel, die in der Kühlvorrichtung 10 gelagert werden können, sind insbesondere Milch und kalt extrahiertes Kaffeegetränk vorgesehen. Milch aus einem ersten Vorratsbehälter kann als Milch oder Milchschaum ausgegeben werden. Kalt extrahiertes Kaffeegetränk - sogenannter Cold Brew Coffee - kann mit Gas angereichert als sogenannter Nitro Cold Brew Coffee ausgegeben werden.

Wesentlich im Rahmen der Erfindung ist insbesondere, dass ein Pumpenmodul nur für eine Art von Lebensmittel vorgesehen ist. Jedes Pumpenmodul besitzt zu diesem Zweck einen Code, etwa einen RFID-Chip oder einen Barcode, der über einen entsprechenden Leser am Gestellrahmen 20 ausgelesen werden kann. Über die Steuerschnittstelle wird die entsprechende Information an die angeschlossene Getränkeausgabevorrichtung gemeldet, sodass die Information vorhanden ist, welche Arten von flüssigen Lebensmitteln zur Verfügung stehen. Würden mit ein- und demselben Pumpenmodul unterschiedliche Lebensmittelarten gefördert, so würde dies zu geschmacklichen Beeinträchtigungen führen. Über unterschiedliche Anschlussformen an den Ansaugleitungen 34' der Pumpenmodule 30, 30a kann sichergestellt werden, dass nicht versehentlich ein falscher, für das betreffende Pumpenmodul nicht vorgesehener Vorratsbehälter angeschlossen wird. Ein im Pumpenmodul verbauter RFID-Chip hat den zusätzlichen Vorteil, dass Informationen über die Nutzungszeiten wie etwa Betriebsstunden, Anzahl Produktausgaben, Anzahl Reinigungszyklen etc. auf den RFID zurückgeschrieben werden können, die dann im Wartungsfall abgerufen werden können.

Durch Entriegeln der Riegel 26 kann jedes einzelne der Pumpenmodule nach vorne aus dem Gestellrahmen 20 herausgezogen werden. Beim Einsetzen eines Pumpenmoduls in eines der Einschubfächer des Gestellrahmens 20 werden die an der Rückseite der Pumpenmodule vorhandenen elektrischen und hydraulischen Steckanschlüsse 37, 36, 520, 521, 522 automatisch mit ihren entsprechenden, an der Rückseite des Gestellrahmens 20 bzw. des zugehörigen Einschubfaches an entsprechender Position vorgesehenen Gegenstücken zusammengeführt und bilden jeweils eine elektrische bzw. hydraulische Verbindung mit den innerhalb der Kühlvorrichtung verlegten Leitungen. So ist eine einfache Montage bzw. Austausch eines Pumpenmoduls möglich.

In Figur 6 ist die Reinigungsvorrichtung 60 vergrößert dargestellt. Sie umfasst einen Mischbehälter 62, in dem Reinigungsmittellösung angemischt wird. Zu diesem Zweck wird aus einem Reinigungsmittelbehälter 63 Reinigerkonzentrat in den Mischbehälter 62 gefördert. Hierzu dient eine an den Reinigungsmittelbehälter 63 angeschlossene Dosierpumpe 64 sowie ein Durchflussmesser 65, mit dem die geförderte Konzentratmenge gemessen und dosiert werden kann. Außerdem kann der Durchflussmesser 65 als Leermeldesensor für das Reinigungskonzentrat dienen.

Hinter dem Durchflussmesser 65 befindet sich ein Umschaltventil 66, welches zum Einfüllen von Reinigerkonzentrat in den Mischbehälter 62 in die untere, in Figur 6 nicht gezeigte Schaltstellung gebracht wird. Anschließend wird das Umschaltventil 66 in seine obere, in Figur 6 gezeigte Schaltstellung gebracht. In dieser Schaltstellung kann in den Mischbehälter 62 Warmwasser vom Warmwasseranschluss 68 über das zu diesem Zweck geöffnete Ventil 69 in den Mischbehälter 62 eingefüllt werden. Über den Durchflussmesser 65 kann wiederum die Menge an zugefülltem Warmwasser gemessen und dosiert werden, sodass in dem Mischbehälter 62 eine Reinigungsmittellösung ("Flotte") vorgegebener Konzentration angemischt werden kann. Ein Rückschlagventil 67 zwischen Dosierpumpe 64 und Durchflussmesser 65 verhindert, dass bei geöffnetem Ventil 69 Wasser in Richtung des Reinigungsmittelbehälters 63 strömen kann.

Nachdem die Reinigungsmittellösung in dem Mischbehälter 62 angemischt wurde, ist die Reinigungsvorrichtung 60 betriebsbereit und kann die Reinigungsmittellösung an den Reinigungsmittelleitungen 61 bereitstellen. Die Reinigungsmittellösung wird über eine Entnahmeleitung 70 und einen zweiten Durchflussmesser 71 aus dem Mischbehälter 62 entnommen. Die zur Kühlvorrichtung 10 führenden Reinigungsmittelleitungen 61 sind jeweils über ein Ventil 72a bis 72d mit dem zweiten Durchflussmesser 71 verbunden. Die Ventile 72a bis 72d sind hierbei zu einem Ventilblock 72 zusammengefasst. Zur Durchführung eines Reinigungsdurchlaufs eines der Pumpenmodule 30a, 30a', 30a", 30a‴ wird das betreffende Ventil 72a bis 72d geöffnet, sodass mittels der Pumpe 51 des Pumpenmoduls über die Reinigungsmittelleitung 61 Reinigungsmittellösung angesaugt werden kann. Anschließend wird nochmals mit warmen Wasser aus dem Warmwasseranschluss 68 nachgespült, indem das Ventil 69 geöffnet und das Umschaltventil 66 in seine obere Schaltstellung gebracht wird.

## Patentansprüche

1. Vorrichtung mit einem Vorratsraum (15) zur Lagerung von mehreren Vorratsbehältern (11, 12, 13, 14) mit flüssigen Lebensmitteln und mit zwei oder mehr Aufnahmebuchten (21, 22, 23, 24) zur Aufnahme jeweils eines Pumpenmoduls (30, 30', 30a, 30a', 30a", 30a‴ ) zur Förderung flüssigen Lebensmittelns einer dem betreffenden Pumpenmodul (30, 30', 30a, 30a', 30a", 30a‴ ) jeweils zugeordneten Lebensmittelart zu einer an die Vorrichtung (10) anschließbaren Getränkeausgabevorrichtung,
**dadurch gekennzeichnet, dass**
es sich bei der Vorrichtung um eine Kühlvorrichtung mit einem kühlbaren Vorratsraum (15) handelt, bei der die Aufnahmebuchten (21, 22, 23, 24) an einer Vorderseite eine Öffnung zum Einführen eines Pumpenmoduls (30, 30', 30a, 30a', 30a", 30a‴ ) und an einer der Öffnung abgewandten Seite ein oder mehrere hydraulische und/oder elektrische Steckanschlüsse (36, 37) aufweisen, über die jeweils mit an einer Rückseite (33) des einführbaren Pumpenmoduls (30, 30', 30a, 30a', 30a", 30a‴ ) angeordneten und entsprechend positionierten Gegenstücken eine hydraulische und/oder elektrische Verbindung des einführbaren Pumpenmoduls (30, 30', 30a, 30a', 30a", 30a‴ ) mit der Kühlvorrichtung (10) gebildet wird.

2. Kühlvorrichtung nach Anspruch 1, mit ein oder mehreren in die Aufnahmebuchten eingeführten Pumpenmodulen (30, 30', 30a, 30a', 30a", 30a‴).

3. Kühlvorrichtung nach Anspruch 2, bei der innerhalb des kühlbaren Vorratsraums (15) ein Gestellrahmen (20) mit Einschubfächern (21, 22, 23, 24) für die Pumpenmodule (30, 30', 30a, 30a', 30a", 30a‴ ) angeordnet ist und die Pumpenmodule (30, 30', 30a, 30a', 30a", 30a‴ ) als Einschubmodule ausgebildet sind.

4. Kühlvorrichtung nach Anspruch 2 oder 3, bei der jedes der Pumpenmodule (30, 30', 30a, 30a', 30a", 30a‴ ) frontseitig je mindestens einen als Produktanschluss dienenden Anschluss (35) für eine mit einem zugeordneten Vorratsbehälter (11, 12, 13, 14, 13', 13", 13‴) verbindbare, flexible Ansaugleitung (34') aufweist.

5. Kühlvorrichtung nach Anspruch 4, bei der jedes der Pumpenmodule (30, 30', 30a, 30a', 30a", 30a‴ ) frontseitig je mindestens einen zweiten, als Reinigungsanschluss ausgebildeten Anschluss (35) aufweist, mit dem die dem jeweiligen Pumpenmodul (30, 30', 30a, 30a', 30a", 30a‴ ) zugehörige flexible Ansaugleitung (34') statt mit einem Vorratsbehälter (11, 12, 13, 14, 13', 13", 13‴) verbunden werden kann, um eine Schleife zu bilden, wobei der zweite Anschluss (35) zur Rückseite (33) des Pumpenmoduls (30, 30', 30a, 30a', 30a", 30a‴ ) geführt und dort mit einer Reinigungsflüssigkeitszuleitung (61) verbunden ist, insbesondere bei der die Reinigungsflüssigkeitszuleitung (61) über einen an der Rückseite (33) des jeweiligen Pumpenmoduls (30, 30', 30a, 30a', 30a", 30a‴ ) befindlichen hydraulischen Steckanschluss zu einer an die Kühlvorrichtung (10) angeschlossenen Reinigungsvorrichtung (60) geführt ist, welche das jeweilige Pumpenmodul (30, 30', 30a, 30a', 30a", 30a‴ ) zur Durchführung eines Reinigungsvorgangs mit Reinigungsflüssigkeit versorgt.

6. Kühlvorrichtung nach Anspruch 4 oder 5, bei zumindest eines der Pumpenmodule (30, 30') frontseitig zwei Produktschlüsse (34, 34a) für mit separaten Vorratsbehältern (11, 12, 13, 14, 13', 13", 13‴) verbindbare Ansaugleitungen (34') und zwei Reinigungsanschlüsse aufweist, wobei die Reinigungsanschlüsse innerhalb des Pumpenmoduls (30, 40) parallelgeschaltet sind und die beiden Produktanschlüsse (34) über eine Ventilanordnung (511) wahlweise mit einer Pumpe (51) des Pumpenmoduls (30, 40) verbindbar sind.

7. Kühlvorrichtung nach einem der Ansprüche 2 bis 6, bei der jedes der Pumpenmodule (30, 30', 30a, 30a', 30a", 30a‴ ) rückseitig mindestens einen hydraulischen Steckanschluss (36) aufweist, der jeweils mit einem an einer Rückseite der Aufnahmebuchten (21, 22, 23, 24) angeordneten und entsprechend positionierten Gegenstück eine hydraulische Verbindung zu je einer innerhalb der Kühlvorrichtung (10) verlegten Getränkeleitung (16a) für das jeweils zu fördernde flüssige Lebensmittel bildet.

8. Kühlvorrichtung nach einem der Ansprüche 2 bis 7, bei der jedes der Pumpenmodule (30, 30a, 30a', 30a", 30a‴ ) einen über die Kühlvorrichtung (10) auslesbaren Code aufweist, welcher die dem Pumpenmodul (30, 30a, 30a', 30a", 30a‴ ) zugeordnete Lebensmittelart angibt, und die Kühlvorrichtung (10) ausgebildet ist, die von dem jeweiligen Pumpenmodul (30, 30a, 30a', 30a", 30a‴ ) ausgelesene Lebensmittelart an die angeschlossene Getränkeausgabevorrichtung zu melden, vorzugsweise, bei der die Kühlvorrichtung (10) ausgebildet ist, zusätzlich den aktuellen Betriebszustand der Pumpenmodule (30, 30a, 30a', 30a", 30a‴ ) zu melden.

9. Kühlvorrichtung nach einem der Ansprüche 2 bis 8, bei der zumindest eines der Pumpenmodule (30, 30', 30a, 30a', 30a", 30a‴ ) eine Pumpe (51), eine saugseitig der Pumpe (51) in die Pumpenzuleitung (513) einmündende Gaszuführleitung (516, 516'), sowie ein in Förderrichtung hinter der Pumpe (51) angeordnetes Gegendruckelement (53) aufweist, über welches von der Pumpe (51) angesaugtes Fluid in Richtung der an die Kühlvorrichtung (10) angeschlossenen Getränkeausgabevorrichtung gefördert wird.

10. Kühlvorrichtung nach Anspruch 9, bei der als Gegendruckelement (53) eine Drossel oder ein statischer Mischer, insbesondere Wendelmischer verwendet wird, insbesondere, bei der als Pumpe (51) eine Zahnradpumpe verwendet wird.

11. Kühlvorrichtung nach einem der Ansprüche 9 oder 10, bei der in der Gaszuführleitung (516, 516') ein Gasdosierventil (517), insbesondere ein getaktetes Schließventil, zur Dosierung von dem flüssigen Lebensmittel zugeführtem Gas angeordnet ist.

12. Kühlvorrichtung nach einem der Ansprüche 9 bis 11, mit einem Hochdruckanschluss (311) zum Anschluss eines außerhalb der Kühlvorrichtung angeordneten Gasdruckbehälters, in welchem Gas unter Druck gespeichert ist, einen eingangsseitig mit dem Hochdruckanschluss (311) verbundenen Druckminderer (312), welcher ausgebildet ist, das Gas bis zu einem Druck nahe des Umgebungsdrucks, insbesondere weniger als 0,5 bar, weiter bevorzugt weniger als 100 mbar über dem Umgebungsdruck, zu entspannen, und welcher ausgangsseitig mit der in die Pumpenzuleitung (513) mündenden Gaszuführleitung (516, 516') verbunden ist, um das entspannte Gas dem angesaugten Getränk saugseitig der Pumpe (51) zuzuführen.

13. Kühlvorrichtung nach einem der Ansprüche 2 bis 12, mit einer Steuerschnittstellenschaltung (37) zum Anschluss einer der externen Getränkeausgabevorrichtung zugeordneten Steuerung, über welche die Pumpenmodule (30, 30', 30a, 30a', 30a", 30a‴ ) ansteuerbar sind.

14. Anordnung aus einer Kühlvorrichtung nach einem der Ansprüche 2 bis 13 und einer an die Kühlvorrichtung (10) angeschlossenen Reinigungsvorrichtung (60), welche die einzelnen Pumpenmodule (30, 30', 30a, 30a', 30a", 30a‴ ) der Kühlvorrichtung (10) über separate, an ein Anschlussfeld (320) der Kühlvorrichtung (10) angeschlossene Reinigungsflüssigkeitszuleitungen (61) zur Durchführung von Reinigungsvorgängen mit Reinigungsflüssigkeit versorgt.

15. Anordnung nach Anspruch 14, bei der die Reinigungsvorrichtung (60) einen Reinigungsmittelvorratsbehälter (63) mit Reinigerkonzentrat, einen Mischbehälter (62) zum Anmischen einer Reinigungsflüssigkeit aus Reinigerkonzentrat und Wasser, einen über ein Absperrventil (66, 69) mit dem Mischbehälter (62) verbindbaren Wasserzulauf (68), eine Dosierpumpe (64) zum dosierten Fördern von Reinigerkonzentrat aus dem Reinigungsmittelvorratsbehälter (63) in den Mischbehälter (62), sowie mehrere, mit dem Mischbehälter (62) verbundene und über getrennte Auslassventile (72a, 72b, 72c, 72d) separat aktivierbare Auslassanschlüsse aufweist, die mit den Reinigungsflüssigkeitszuleitungen (61) der Kühlvorrichtung (10) verbunden sind.

## Claims

1. Device having a storage space (15) for storing several storage containers (11, 12, 13, 14) having liquid foodstuffs and having two or more reception bays (21, 22, 23, 24) for receiving respectively one pump module (30, 30', 30a, 30a', 30a", 30a‴) for conveying liquid foodstuffs of a type of foodstuff respectively assigned to the pump module (30, 30', 30a, 30a', 30a", 30a‴) concerned to a beverage output device which can be connected to the device (10),
**characterised in that**
the device is a cooling device having a coolable storage space (15), in which the reception bays (21, 22, 23, 24) have on a front side an opening for introducing a pump module (30, 30', 30a, 30a', 30a", 30a‴) and on a side facing away from the opening one or more hydraulic and/or electrical plug terminals (36, 37), by means of which respectively with counter pieces, which are arranged on a rear side (33) of the introducible pump module (30, 30', 30a, 30a', 30a", 30a‴) and correspondingly positioned, a hydraulic and/or electrical connection of the introducible pump module (30, 30', 30a, 30a', 30a", 30a‴) to the cooling device (10) is formed.

2. Cooling device according to claim 1, having one or more pump modules (30, 30', 30a, 30a', 30a", 30a‴) introduced into the reception bays.

3. Cooling device according to claim 2, in which a framework (20) with slide-in compartments (21, 22, 23, 24) for the pump modules (30, 30', 30a, 30a', 30a", 30a‴) is arranged within the coolable storage space (15) and the pump modules (30, 30', 30a, 30a', 30a", 30a‴) are designed as slide-in modules.

4. Cooling device according to claim 2 or 3,
in which each of the pump modules (30, 30', 30a, 30a', 30a", 30a‴) has on the front side in each case at least one terminal (35) serving as a product terminal for a flexible suction line (34') which is connectable to an assigned storage container (11, 12, 13, 14, 13', 13", 13"').

5. Cooling device according to claim 4, in which each of the pump modules (30, 30', 30a, 30a', 30a", 30a‴) has on the front side in each case at least one second terminal (35) in the form of a cleaning terminal, to which the flexible suction line (34') assigned to the respective pump module (30, 30', 30a, 30a', 30a", 30a‴) can be connected instead of to a storage container (11, 12, 13, 14, 13', 13", 13‴), in order to form a loop, wherein the second terminal (35) is guided to the rear side (33) of the pump module (30, 30', 30a, 30a', 30a", 30a‴) and is there connected to a cleaning fluid supply line (61), in particular in which the cleaning fluid supply line (61) is routed via an hydraulic plug-in terminal, located on the rear side (33) of the respective pump module (30, 30', 30a, 30a', 30a", 30a‴), to a cleaning device (60) connected to the cooling device (10), which cleaning device supplies the respective pump module (30, 30', 30a, 30a', 30a", 30a‴) with cleaning fluid for carrying out a cleaning procedure.

6. Cooling device according to claim 4 or 5, in which at least one of the pump modules (30, 30') has on the front side two product terminals (34, 34a) for suction lines (34') which are connectable to separate storage containers (11, 12, 13, 14, 13', 13", 13‴) and two cleaning terminals, wherein the cleaning terminals are connected in parallel within the pump module (30, 40) and the two product terminals (34) are connectable via a valve arrangement (511) selectively with a pump (51) of the pump module (30, 40).

7. Cooling device according to any of claims 2 to 6, in which each of the pump modules (30, 30', 30a, 30a', 30a", 30a‴) has on the rear side at least one hydraulic plug-in terminal (36), which respectively with a counter piece, arranged on the rear side of the reception bays (21, 22, 23, 24) and appropriately positioned, forms an hydraulic connection to in each case one beverage line (16a), laid within the cooling device (10), for the respective liquid foodstuff to be conveyed.

8. Cooling device according to any of claims 2 to 7, in which each of the pump modules (30, 30a, 30a', 30a", 30a‴) has a code which can be read out via the cooling device (10), which code specifies the type of foodstuff assigned to the pump module (30, 30a, 30a', 30a", 30a‴), and the cooling device (10) is designed to register the type of foodstuff read out from the respective pump module (30, 30a, 30a', 30a", 30a‴) to the connected beverage output device, preferably, in which the cooling device (10) is configured to register additionally the current operating state of the pump modules (30, 30a, 30a', 30a", 30a‴).

9. Cooling device according to any of claims 2 to 8, in which at least one of the pump modules (30, 30', 30a, 30a', 30a", 30a‴) has a pump (51), a gas supply line (516, 516') opening in to the pump supply line (513) on the intake side of the pump (51), and a counter pressure element (53), arranged in conveying direction after the pump (51), by means of which fluid suctioned by the pump (51) is conveyed in the direction of the beverage output device connected to the cooling device (10).

10. Cooling device according to claim 9, in which as a counter pressure element (53) a throttle or a static mixer, in particular a helical mixer, is used, in particular in which a gear pump is used as a pump (51).

11. Cooling device according to any of claims 9 or 10, in which a gas metering valve (517), in particular a pulsed closing valve, is arranged in the gas supply line (516, 516') for metering gas supplied to the liquid foodstuff.

12. Cooling device according to any of claims 9 to 11, having a high-pressure terminal (311) for connection to a pressurised gas container arranged externally to the cooling device, in which gas is stored under pressure, a pressure reducer (312), connected to the high-pressure terminal (311) on the input side, which is designed to relax the gas as far as a pressure close to environmental pressure, in particular less than 0.5 bar, further preferably less than 100 mbar above environmental pressure, and which is connected on the output side to the gas supply line (516, 516') opening in the pump supply line (513) in order to supply the relaxed gas to the suctioned beverage on the inlet side of the pump (51).

13. Cooling device according to any of claims 2 to 12, having a control interface circuit (37) for connection to a controller assigned to the external beverage output device, via which control interface circuit the pump modules (30, 30', 30a, 30a', 30a", 30a‴) can be controlled.

14. Arrangement consisting of a cooling device according to any of claims 2 to 13 and a cleaning device (60) connected to the cooling device (10), which supplies the individual pump modules (30, 30', 30a, 30a', 30a", 30a‴) of the cooling device (10) with cleaning fluid via separate cleaning fluid supply lines (61) connected to a terminal field (320) of the cooling device (10) for carrying out cleaning procedures.

15. Arrangement according to claim 14, in which the cleaning device (60) has a cleaning agent storage container (63) having cleaning agent concentrate, a mixing container (62) for premixing a cleaning fluid consisting of cleaning agent concentrate and water, a water supply (68) which can be connected to the mixing container (62) via a stop valve (66, 69), a metering pump (64) for the metered conveyance of cleaning agent concentrate from the cleaning agent storage container (63) in to the mixing container (62), as well as several outlet terminals which are connected to the mixing container (62) and which can be activated separately via separate outlet valves (72a, 72b, 72c, 72d), which are connected to the cleaning fluid supply lines (61) of the cooling device (10).

## Revendications

1. Dispositif avec un espace de stockage (15) pour stocker plusieurs récipients de stockage (11, 12, 13, 14) présentant des produits alimentaires liquides et deux ou plusieurs compartiments de réception (21, 22, 23, 24) pour recevoir respectivement un module de pompe (30, 30', 30a, 30a', 30a", 30a‴) permettant le transport du produit alimentaire liquide d'un type de produit alimentaire respectivement associé au module de pompe (30, 30', 30a, 30a', 30a", 30a‴) concerné vers un dispositif de distribution de boisson pouvant être raccordé au dispositif (10),
**caractérisé en ce que**
le dispositif est un dispositif de refroidissement avec un espace de stockage (15) pouvant être refroidi, dans lequel les compartiments de réception (21, 22, 23, 24) présentent sur une face avant une ouverture pour l'insertion d'un module de pompe (30, 30', 30a, 30a', 30a", 30a‴) et sur une face opposée à l'ouverture un ou plusieurs raccords enfichables (36, 37) hydrauliques et/ou électriques, par l'intermédiaire desquels une connexion hydraulique et/ou électrique du module de pompe (30, 30', 30a, 30a', 30a", 30a‴) insérable avec le dispositif de refroidissement (10) est formée respectivement avec des contre-pièces disposées sur une face arrière (33) du module de pompe (30, 30', 30a, 30a', 30a", 30a‴) insérable et positionnées de manière correspondante.

2. Dispositif de refroidissement selon la revendication 1, comprenant un ou plusieurs modules de pompe (30, 30', 30a, 30a', 30a", 30a‴) insérés dans les compartiments de réception.

3. Dispositif de refroidissement selon la revendication 2, dans lequel un cadre de bâti (20) avec des compartiments d'insertion (21, 22, 23, 24) pour les modules de pompe (30, 30', 30a, 30a', 30a", 30a‴) est disposé à l'intérieur de l'espace de stockage (15) pouvant être refroidi, et les modules de pompe (30, 30', 30a, 30a', 30a", 30a"') sont conçus comme des modules d'insertion.

4. Dispositif de refroidissement selon la revendication 2 ou 3,
dans lequel chacun des modules de pompe (30, 30', 30a, 30a', 30a", 30a‴) présente sur sa face avant au moins un raccord (35) servant de raccord de produit pour une conduite d'aspiration (34') flexible pouvant être reliée à un récipient de stockage (11, 12, 13, 14, 13', 13", 13‴) associé.

5. Dispositif de refroidissement selon la revendication 4, dans lequel chacun des modules de pompe (30, 30', 30a, 30a', 30a", 30a"') présente sur sa face avant au moins un second raccord (35) conçu comme un raccord de nettoyage, avec lequel la conduite d'aspiration (34') flexible associée au module de pompe (30, 30', 30a, 30a', 30a", 30a‴) respectif peut être reliée au lieu à un récipient de stockage (11, 12, 13, 14, 13', 13", 13"') pour former une boucle, dans lequel le second raccord (35) est dirigé vers la face arrière (33) du module de pompe (30, 30', 30a, 30a', 30a", 30a‴) et y est relié à une conduite d'amenée de liquide de nettoyage (61), en particulier dans lequel la conduite d'amenée de liquide de nettoyage (61) est dirigée, par l'intermédiaire d'un raccord enfichable hydraulique se trouvant sur la face arrière (33) du module de pompe (30, 30', 30a, 30a', 30a", 30a"') respectif, vers un dispositif de nettoyage (60) raccordé au dispositif de refroidissement (10), qui alimente en liquide de nettoyage le module de pompe (30, 30', 30a, 30a', 30a", 30a‴) respectif pour effectuer une opération de nettoyage.

6. Dispositif de refroidissement selon la revendication 4 ou 5, dans lequel au moins l'un des modules de pompe (30, 30') présente sur sa face avant deux raccords de produit (34, 34a) pour des conduites d'aspiration (34') pouvant être reliées à des récipients de stockage (11, 12, 13, 14, 13', 13", 13"') séparés et deux raccords de nettoyage, dans lequel les raccords de nettoyage sont montés en parallèle à l'intérieur du module de pompe (30, 40) et les deux raccords de produit (34) peuvent être reliés au choix à une pompe (51) du module de pompe (30, 40) par l'intermédiaire d'un agencement de soupape (511).

7. Dispositif de refroidissement selon l'une quelconque des revendications 2 à 6, dans lequel chacun des modules de pompe (30, 30', 30a, 30a', 30a", 30a‴) présente sur sa face arrière au moins un raccord enfichable (36) hydraulique, qui forme respectivement avec une contre-pièce disposée sur une face arrière des compartiments de réception (21, 22, 23, 24) et positionnée de manière correspondante une liaison hydraulique avec respectivement une conduite de boisson (16a) posée à l'intérieur du dispositif de refroidissement (10) pour le produit alimentaire liquide respectif à transporter.

8. Dispositif de refroidissement selon l'une quelconque des revendications 2 à 7, dans lequel chacun des modules de pompe (30, 30a, 30a', 30a", 30a‴) présente un code pouvant être lu par le dispositif de refroidissement (10), qui indique le type de produit alimentaire associé au module de pompe (30, 30a, 30a', 30a", 30a‴), et le dispositif de refroidissement (10) est conçu pour signaler le type de produit alimentaire lu par le module de pompe respectif (30, 30a, 30a', 30a", 30a‴) au dispositif de distribution de boisson raccordé, de préférence dans lequel le dispositif de refroidissement (10) est conçu pour signaler en outre l'état de fonctionnement actuel des modules de pompe (30, 30a, 30a', 30a", 30a‴).

9. Dispositif de refroidissement selon l'une quelconque des revendications 2 à 8, dans lequel au moins l'un des modules de pompe (30, 30', 30a, 30a', 30a", 30a‴) présente une pompe (51), une conduite d'amenée de gaz (516, 516') débouchant dans la conduite d'alimentation de pompe (513) côté aspiration de la pompe (51), ainsi qu'un élément de contre-pression (53) disposé en aval de la pompe (51) dans le sens de transport, par lequel le fluide aspiré par la pompe (51) est transporté en direction du dispositif de distribution de boisson raccordé au dispositif de refroidissement (10).

10. Dispositif de refroidissement selon la revendication 9, dans lequel est utilisé comme élément de contre-pression (53) un étrangleur ou un mélangeur statique, en particulier un mélangeur réversible, en particulier dans lequel une pompe à engrenages est utilisée comme pompe (51).

11. Dispositif de refroidissement selon l'une quelconque des revendications 9 ou 10, dans lequel une vanne de dosage de gaz (517), en particulier une vanne de fermeture cadencée, est disposée dans la conduite d'amenée de gaz (516, 516') pour doser le gaz amené au produit alimentaire liquide.

12. Dispositif de refroidissement selon l'une quelconque des revendications 9 à 11, avec un raccord haute pression (311) pour le raccordement d'un récipient de gaz sous pression disposé à l'extérieur du dispositif de refroidissement, dans lequel du gaz est stocké sous pression, un réducteur de pression (312) relié côté entrée au raccord haute pression (311), qui est conçu pour détendre le gaz jusqu'à une pression proche de la pression ambiante, en particulier inférieure à 0,5 bar, en outre préférentiellement inférieure à 100 mbar au-dessus de la pression ambiante, et qui est relié côté sortie à la conduite d'amenée de gaz (516, 516') débouchant dans la conduite d'alimentation de pompe (513) afin d'amener le gaz détendu à la boisson aspirée côté aspiration de la pompe (51).

13. Dispositif de refroidissement selon l'une quelconque des revendications 2 à 12, avec un circuit d'interface de commande (37) pour le raccordement d'une commande associée au dispositif de distribution de boisson externe, par l'intermédiaire duquel les modules de pompe (30, 30', 30a, 30a', 30a", 30a"') peuvent être commandés.

14. Agencement composé d'un dispositif de refroidissement selon l'une quelconque des revendications 2 à 13 et d'un dispositif de nettoyage (60) raccordé au dispositif de refroidissement (10), qui alimente en liquide de nettoyage les différents modules de pompe (30, 30', 30a, 30a', 30a", 30a"') du dispositif de refroidissement (10) par l'intermédiaire de conduites d'amenée de liquide de nettoyage (61) séparées raccordées à un panneau de raccordement (320) du dispositif de refroidissement (10) pour effectuer des opérations de nettoyage.

15. Agencement selon la revendication 14, dans lequel le dispositif de nettoyage (60) présente un récipient de stockage de produit de nettoyage (63) avec du concentré de nettoyant, un récipient de mélange (62) pour mélanger un liquide de nettoyage composé de concentré de nettoyant et d'eau, une arrivée d'eau (68) pouvant être reliée au récipient de mélange (62) par l'intermédiaire d'une vanne d'arrêt (66, 69), une pompe de dosage (64) pour le transport dosé de concentré de nettoyant du récipient de stockage de produit de nettoyage (63) dans le récipient de mélange (62), ainsi que plusieurs raccords de sortie reliés au récipient de mélange (62) et activables séparément par l'intermédiaire de soupapes de sortie (72a, 72b, 72c, 72d) séparées qui sont reliées aux conduites d'amenée de liquide de nettoyage (61) du dispositif de refroidissement (10).
